# EUROPÄISCHE PATENTSCHRIFT

(11) **EP 0 466 788 B1**
(45) Veröffentlichungstag und Bekanntmachung des Hinweises auf die Patenterteilung: **12.01.1994**
(21) Anmeldenummer: 90906161.6
(22) Anmeldetag: 14.04.1990
(51) Int. Cl.: G01S 17/88, G01S 7/48

(54) **OBJEKT-ERKENNUNGSVORRICHTUNG FÜR KRAFTFAHRZEUGE**
OBJECT-SENSING DEVICE FOR MOTOR VEHICLES
DISPOSITIF DE RECONNAISSANCE D'OBJETS POUR VEHICULES A MOTEUR

(30) Priorität: 15.04.1989 DE 3912398
(43) Veröffentlichungstag der Anmeldung: 22.01.1992
(73) Patentinhaber: Bayerische Motoren Werke Aktiengesellschaft, 80788 München (DE)
(72) Erfinder: WEISHAUPT, Walter, D-8000 München 60 (DE)
(74) Vertreter: Bullwein, Fritz
(86) Internationale Anmeldenummer: EP9000591
(87) Internationale Veröffentlichungsnummer: WO9013050

(56) Entgegenhaltungen:
- CH-A- 486 702
- DE-A- 2 327 186
- DE-A- 3 222 263
- DE-A- 3 525 927
- FR-A- 2 194 162
- GB-A- 1 588 289
- US-A-46 927 64

## Beschreibung

Die Erfindung bezieht sich auf eine Objekt-Erkennungsvorrichtung für Kraftfahrzeuge nach dem Oberbegriff des Patentanspruchs 1.

Bekannte Vorrichtungen dieser Art dienen dazu, Hindernisse vor dem Kraftfahrzeug zu erkennen und ggf. die erforderlichen Maßnahmen auszulösen. Hierzu gehört das Anzeigen einer drohenden Kollision ebenso wie beispielsweise ein selbsttätiger Bremseneingriff, mit dem das Kraftfahrzeug rechtzeitig zum Stehen gebracht wird. Entsprechende Vorrichtungen sind beispielsweise aus der DE-OS 37 01 340 der Anmelderin bekannt.

Bekannte Vorrichtungen der eingangs genannten Art bieten zwar ein Höchstmaß an Komfort, da für en Fahrzeugbenutzer ein irgendwie gearteter Eingriff nicht erforderlich ist. Jedoch ergibt sich das Problem, daß eine Signalabgabe als Folge eines erkannten Hindernisses zu häufig erfolgt. Ursache hierfür ist, daß die tatsächlichen Möglichkeiten des Fahrzeugbenutzers, ein Hindernis zu erkennen und eine Kollision zu vermeiden, nicht gebührend berücksichtigt werden.

Aus der CH-A-486702 ist eine Vorrichtung der eingangs genannten Art bekannt, bei der die beiden Betriebs-Zustände durch eine unterschiedliche Verstärkungsregelung des Empfängers in Abhängigkeit von der jeweiligen Sichtweite vorgenommen wird. Damit können die Wirkungen atmosphärischer oder meteorologischer Hindernisse wie Dunstschichten, Regen- oder Schneewolken ausgeglichen werden.

Aus der DE-A 32 22 263 ist ferner ein Abstands-Warnsystem für Kraftfahrzeuge bekannt, bei dem eine Radar-Anlage einen einfachen und einen selektiven Überwachungsmodus besitzt. Ersteres ist bei einer Geradeausfahrt mit relativ hoher Geschwindigkeit, beispielsweise einer Autobahnfahrt gegeben, während letzteres im komplexen Straßenverkehr, d.h. typischerweise Stadtverkehr, vorliegt. Im einfachen Überwachungsmodus werden alle Fahrzeuge detektiert, die gleich schnell oder langsamer vorausfahren bzw. die stehen bzw. entgegenkommen. Beim selektiven Überwachungsmodus hingegen werden nur die Fahrzeuge berücksichtigt, die gleich schnell oder langsamer vorausfahren.

Der Erfindung liegt die Aufgabe zugrunde, eine Objekt-Erkennungs-Vorrichtung für Kraftfahrzeuge der eingangs genannten Art zu schaffen, die auf eine drohendes Hindernis nur dann hinweist, wenn dies tatsächlich erforderlich ist.

Die Erfindung löst diese Aufgabe durch die kennzeichnenden Merkmale des Patentanspruchs 1.

Bei der Erfindung wird zwischen den verschiedenen möglichen Sichtverhältnissen unterschieden. Beim Arbeits-Zustand I sei klare Sicht angenommen. In diesem Fall hat der Fahrzeugbenutzer in der Regel umfassende Möglichkeiten, ein Hindernis in Form von stehenden oder fahrenden Objekten, zu erkennen und die entsprechenden Maßnahmen zur Kollisionsverhinderung selbst zu veranlassen. Lediglich in dem Fall, in dem er ein vor ihm stehendes oder mit verringerter Geschwindigkeit fahrendes Objekt übersieht, soll ein Signal abgegeben werden.

Beim zweiten Arbeits-Zustand der Vorrichtung ist trübe Sicht vorausgesetzt. Der Fahrzeugbenutzer ist in seiner Wahrnehmung stark eingeschränkt. Praktisch jedes Objekt, das von der Vorrichtung erkannt wird, stellt eine Gefahr dar und muß dem Fahrzeugbenutzer signalisiert werden.

Häufig besitzen Objekt-Erkennungsvorrichtungen eine relativ große Reichweite. Für den Arbeits-Zustand II bedeutet dies, daß relativ, eventuell sogar unnötig viele Objekte erkannt werden und häufig ein Signal abgegeben wird. Dies kann verhindert werden, wenn der Entfernungsbereich, innerhalb dessen ein Objekt berücksichtigt wird, wählbar ist. Es gibt dabei die Möglichkeit, den Entfernungsbereich manuell einzustellen. Vorteil davon ist, daß der Fahrzeugbenutzer selbst in die Pflicht genommen wird und veranlaßt wird, seine Fahrweise bewußt entsprechend der eingestellten Entfernung zu wählen.

Es ist aber auch möglich, den Entfernungsbereich selbsttätig, beispielsweise in Abhängigkeit von der Fahrzeuggeschwindigkeit zu wählen. Dies kann beispielsweise mit Hilfe einer Einstellung des Entfernungsbereichs (in Metern) entsprechend der halben Fahrzeuggeschwindigkeit (in km/h) geschehen.

Für den Zustand I wird davon ausgegangen, daß relativ kleine Hindernisse, wie beispielsweise Objekte am Straßenrand, wie Warnbaken, parkende Fahrzeuge, Bebauungen usw. vom Fahrzeugbenutzer in der Regel selbst erkannt werden und er sein Fahrzeug entsprechend steuert. Nur tatsächlich kritische Objekte, die der Fahrzeugbenutzer eigentlich wahrnehmen müßte, jedoch aufgrund einer Ablenkung oder dgl. momentan nicht wahrnimmt, werden signalisiert.

Um dieser Vorgabe noch besser gerecht zu werden, werden auch beim Zustand I die Objekte als kritisch bewertet, deren Relativgeschwindigkeit gleich der Fahrzeuggeschwindigkeit ist und die kontinuierlich oder bei aufeinanderfolgenden Meßvorgängen stets vorhanden sind. Ein derartiger Fall tritt bei einem vor dem Kraftfahrzeug stehenden Objekt, wie beispielsweise einem anderen Kraftfahrzeug oder einer Wand, auf.

Entsprechend einer Verbesserung der Erfindung soll die Vorrichtung auch Objekte erkennen, die sich auf das Kraftfahrzeug zu bewegen und die eine gewisse Größe besitzen, beispielsweise kann es sich dabei um ein stehendes Hindernis in der Fahrbahn handeln. In diesem Fall sieht das Verfahren vor, mit zwei Sender-/Empfängerpaaren zu arbeiten, die auf aneinander anschließende Untersuchungsbereiche ausgerichtet sind. Ein Objekt wird dann als kritisch eingestuft, wenn beide Paare ein Reflexsignal aus der gleichen Entfernung empfangen.

Damit lassen sich kleinere Hindernisse ohne weiteres ausblenden. Diese werden nur von einem Sender-/Empfängerpaar registriert.

Die Erfindung ist anhand der Zeichnung weiter erläutert.
Es zeigt
- Fig. 1: ein erstes Ausführungsbeispiel und
- Fig. 2: ein Schaubild zur Erläuterung eines zweiten Ausführungsbeispiels einer Objekt-Erkennungsvorrichtung gemäß der Erfindung.

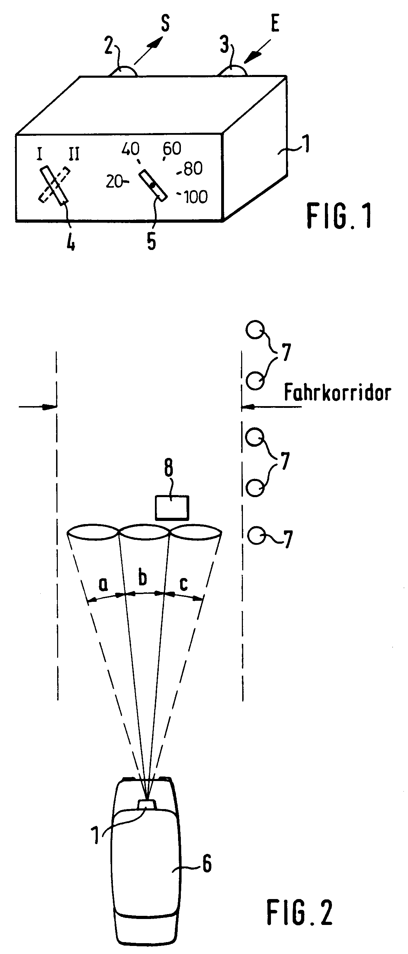

Beim Ausführungsbeispiel von Fig. 1 ist die Vorrichtung als kompakte Baueinheit ausgebildet, die hinter einer nicht dargestellten Sichtscheibe des Kraftfahrzeuges angeordnet werden kann. Sie besitzt einen Sender 2 für ein oder mehrere Infrarot-Lichtbündel und einen Empfänger 3 für die von einem in Fahrtrichtung gelegenen Objekt reflektierten Reflexsignale.

Die Reflexsignale werden über den Empfänger 3 aufgenommen. Bei Unterschreiten des vorgegebenen Sicherheitsabstands wird eine entsprechende Warn- bzw. Sicherheitsmaßnahme ausgelöst.

Wesentlich für die Vorrichtung ist, daß sie zwei Arbeitszustände I und II besitzt. Beim Zustand I herrscht klare Sicht, beim Zustand II trübe Sicht. Die Umschaltung zwischen den beiden Zuständen kann automatisch, beispielsweise in Abhängigkeit von einem nicht dargestellten, an sich bekannten Nebelsensor oder dgl., oder aber manuell mit Hilfe eines Betriebszustandswählers 4 erfolgen. Abhängig von der Einstellung des Wählers 4 wird eine Warn- bzw. Sicherheitsmaßnahme nur dann ausgelöst, wenn dies tatsächlich erforderlich ist.

Für die Einstellung I ist dies dann der Fall, wenn das Reflexsignal ein Objekt aufnimmt, das, bezogen auf die Kraftfahrzeuggeschwindigkeit, eine Relativgeschwindigkeit besitzt, die kleiner als die Fahrzeuggeschwindigkeit ist. Objekte, deren Relativgeschwindigkeit größer oder gleich der Fahrzeuggeschwindigkeit ist, werden nicht als kritisch eingestuft. Hierzu gehören Warnbaken, Bäume, und dgl. am Straßenrand sowie Fahrzeuge vor dem Kraftfahrzeug, deren Geschwindigkeit gleich der oder größer als die Fahrzeuggeschwindigkeit ist.

Bei der Einstellung II werden sämtliche Objekte, die ein Reflexsignal liefern, als kritisch eingestuft. Lediglich Objekte, deren Relativgeschwindigkeit größer als die Fahrzeuggeschwindigkeit ist (vorausfahrende schnellere Fahrzeuge) werden nicht als kritisch registriert.

Eine Ausnahme hierzu sind Objekte, die stets ein Reflexsignal liefern und einem Objekt entsprechen, dessen Abstand sich zum Kraftfahrzeug verringert.

Um in diesem Fall nur die Objekte zu erfassen, die tatsächlich in einem kritischen Abstand liegen, ist zusätzlich ein Drehschalter 5 vorgesehen, mit dem der Entfernungsbereich manuell einstellbar ist. Im vorliegenden Fall werden beispielsweise nur Objekte als kritisch erfaßt, deren Abstand kleiner als 60 m vor dem Fahrzeug ist.

In jedem Fall ist durch die manuelle Einstellung sowohl des Betriebszustandswählers 4 als auch des Drehschalters 5 gewährleistet, daß sich der Fahrer jederzeit dessen bewußt ist, daß die Vorrichtung nicht völlig automatisch arbeitet, sondern er selbst einen Teil der Verantwortung übernehmen muß und seine Fahrweise auf die jeweiligen Verhältnisse einzustellen hat.

In der Stellung II des Betriebszustandswählers 4 wird eine trübe Sicht angenommen. In diesem Fall werden sämtliche Hindernisse, sofern ihre Relativgeschwindigkeit nicht größer als die des Kraftfahrzeugs ist, als kritisch eingestuft und die Warn- bzw. Notfallmaßnahme ausgelöst.

Es ist ohne weiteres möglich, unter Beibehaltung des Konzepts, ein Hindernis nur dann zu signalisieren, wenn dies erforderlich ist und dem Fahrzeugbenutzer seine Verantwortung bewußt zu machen, eine zusätzliche Hilfe anzubieten. Beispielsweise könnte mit Hilfe des Sender-/Empfängerpaars oder mit Hilfe einer sonstigen Einrichtung, wie dem bereits genannten Nebelsensor, dann, wenn tatsächlich eine trübe Sicht erkannt wird, dem Fahrzeugbenutzer ein entsprechender Hinweis oder eine akustische Warnung gegeben werden, den Betriebszustandswähler von der Stellung für den Zustand I in die Stellung für den Zustand II umzuschalten.

Bei Ausführungsbeispiel von Fig. 2 ist eine Draufsicht auf eine Fahrbahn dargestellt. Auf der Fahrbahn befindet sich ein Kraftfahrzeug 6, das mindestens zwei, hier sogar drei aneinander anschließende Sichtbereiche a b c besitzt. Diese werden mit Hilfe von einzelnen Sender-/ Empfängerpaaren beobachtet. In der Stellung I werden Bäume 7 am Fahrbahnrand als unkritisch eingestuft. Diese besitzen eine Relativgeschwindigkeit, die gleich der Fahrzeuggeschwindigkeit ist. Da sie jedoch nur jeweils von einem Sender-/Empfängerpaar erkannt werden, wird davon ausgegangen, daß es sich um kleine, zu vernachlässigende Hindernisse am Fahrbahnrand handelt, die keine Gefahr darstellen.

Bei größeren Hindernissen 8, beispielsweise in der Fahrbahn, ist es jedoch erforderlich, dies dem Fahrzeugbenutzer zu erkennen zu geben. Das Kriterium hierfür ist, wenn zwei Empfänger aus benachbarten Untersuchungsbereichen ein Reflexsignal von ein und demselben Objekt erhalten, dessen Relativgeschwindigkeit kleiner oder gleich der Fahrzeuggeschwindigkeit ist. Letzteres ist dann der Fall, wenn es sich um ein stehendes Fahrzeug oder ein größeres Hindernis in der Fahrbahn handelt. Ersteres gilt, wenn das vorausfahrende Fahrzeug eine kleinere Geschwindigkeit als die Fahrzeuggeschwindigkeit besitzt. In beiden Fällen ist es tatsächlich erforderlich, entsprechende Maßnahmen auszulösen. Hierzu wird dem Fahrzeugbenutzer mit Hilfe der erfindungsgemäßen Einrichtung eine entsprechende Warnung gegeben.

Auch bei einem mehrstrahligen System, wie es in Fig. 2 dargestellt ist, ist bei der Einstellung II (trübe Sicht) eine Objekt-Erkennung dann erforderlich, wenn im Untersuchungsbereich zumindest eines der Sender-/Empfängerpaare ein Objekt liegt und dieses eine Relativgeschwindigkeit besitzt, die kleiner, gleich oder größer als die Fahrzeuggeschwindigkeit ist. Das erfindungsgemäße Verfahren meldet in diesem Fall sämtliche Hindernisse, beispielsweise auch die am Rande stehenden Bäume.

## Patentansprüche

1. Objekt-Erkennungsvorrichtung für Kraftfahrzeuge mit einem Sender-/Empfängerpaar für ein Reflexsignal, das durch ein in Fahrtrichtung liegendes Objekt gebildet ist, mit einem ersten Arbeits-Zustand I und einem zweiten Arbeits-Zustand II, gekennzeichnet durch eine Signalabgabe für den Zustand I für klare Sicht bei einem Objekt, das steht oder langsamer in der Richtung des Kraftfahrzeugs fährt, und für den Zustand II für trübe Sicht darüber hinaus auch bei einem Objekt, das dem Kraftfahrzeug entgegenkommt, wobei die Umschaltung zwischen den Zuständen I und II entweder automatisch mittels eines Nebelsensors oder manuell erfolgt.

2. Vorrichtung nach Anspruch 1, dadurch gekennzeichnet, daß der Entfernungsbereich, innerhalb dessen ein Objekt berücksichtigt ist, manuell wählbar ist.

3. Vorrichtung nach Anspruch 1, dadurch gekennzeichnet, daß beim Zustand I auch dann ein Signal abgegeben wird, wenn die Relativgeschwindigkeit gleich oder größer als die Fahrzeuggeschwindigkeit ist, wenn das Reflexsignal ununterbrochen ein Objekt mit sich verringerndem Abstand anzeigt.

4. Vorrichtung nach einem der Ansprüche 1 bis 3, dadurch gekennzeichnet, daß zwei Sender-/Empfängerpaare auf unterschiedliche Sichtbereiche ausgerichtet sind und eine Signalabgabe erfolgt, wenn beide Empfänger ein Objekt in etwa gleicher Entfernung wahrnehmen, dessen Relativgeschwindigkeit kleiner, gleich oder größer als die Fahrzeuggeschwindigkeit ist.

## Claims

1. An object-sensing device for motor vehicles with a transmitter/receiver pair for a reflected signal which is generated by an object lying in the direction of travel, with a first operating state I and a second operating state II, characterised by the generation of a signal in operating state I under good visibility if an object is stationary or moving more slowly in the direction of the motor vehicle and, additionally, in operating state II under poor visibility if an object is moving towards the motor vehicle, the switching between operating states I and II being either automatic through a fog sensor or manual.

2. A device according to Claim 1, characterised in that the range within which an object is taken into consideration can be selected manually.

3. A device according to Claim 1, characterised in that, in operating state I, a signal is also generated if the relative speed of the object is equal to or greater than that of the vehicle, or if the reflected signal continually indicates an object at a decreasing distance from the motor vehicle.

4. A device according to any one of Claims 1 to 3, characterised in that two transmitter/receiver pairs are aligned for different visual zones and a signal is generated if both receivers sense an object at approximately the same distance, the object having a relative speed equal to or greater than that of the motor vehicle.

## Revendications

1. Dispositif de reconnaissance d'objet pour véhicules à moteur avec une paire d'émetteur/récepteur pour un signal reflex, qui est formé par un objet se trouvant dans le sens du déplacement, avec un premier état de fonctionnement I et un deuxième état de fonctionnement II, dispositif de reconnaissance caractérisé par la délivrance d'un signal pour l'état I ( pour visibilité claire) dans le cas d'un objet qui est à l'arrêt ou se déplace plus lentement dans le sens de la marche du véhicule à moteur, et pour l'état II (pour visibilité trouble) même dans le cas d'un objet, qui vient à la rencontre du véhicule à moteur, la commutation entre les états I et II ayant lieu soit automatiquement au moyen d'un détecteur de brouillard, soit manuellement.

2. Dispositif selon la revendication 1, caractérisé en ce que la zone d'éloignement à l'intérieur de laquelle on peut prendre en considération un objet, peut être sélectionnée manuellement.

3. Dispositif selon la revendication 1, caractérisé en ce que dans le cas de l'état I, il est délivré un signal même si la vitesse relative est égale ou plus grande que la vitesse du véhicule à moteur, quand le signal reflex indique de façon ininterrompue un objet dont la distance se réduit.

4. Dispositif selon l'une des revendications 1 à 3, caractérisé en ce que l'on oriente deux paires d'émetteurs/récepteurs sur des zones de visibilité différentes et l'on a une délivrance de signal quand les deux récepteurs détectent un objet à peu près au même éloignement dont la vitesse relative est plus petite, égale, ou plus grande que la vitesse du véhicule.
